# EUROPÄISCHE PATENTANMELDUNG

(11) **EP 4 796 913 A1**
(43) Veröffentlichungstag der Anmeldung: **26.08.2026**
(21) Anmeldenummer: 25159460.2
(22) Anmeldetag: 21.02.2025
(51) Int. Cl.: G01N 3/00

(54) **VERFAHREN, VORRICHTUNG UND COMPUTERPROGRAMM ZUM PRÜFEN EINER EIGNUNG VON MATERIAL UNTER THERMOMECHANISCHER BELASTUNG**

(71) Anmelder: Fraunhofer-Gesellschaft zur Förderung der angewandten Forschung e.V., 80686 München (DE)
(72) Erfinder: REICH, Stefan, 79104 Freiburg (DE); SCHAUFELBERGER, Benjamin, 79104 Freiburg (DE); HAHN, Philipp, 79104 Freiburg (DE)
(74) Vertreter: 2SPL Patentanwälte PartG mbB

(57) **Zusammenfassung**

Vorgeschlagen wird ein Verfahren zum Prüfen einer Eignung von Material unter thermomechanischer Belastung, umfassend ein Anordnen (110) des Materials in einer reaktionsträgen Umgebung sowie ein Einbringen einer thermischen Energie (120) definierter Größe auf einer Oberfläche des Materials. Ferner wird eine definierte mechanischen Belastung (130) auf das Material ausgeübt und eine Deformation des Materials (140) in Reaktion auf die mechanische Belastung gemessen.

## Beschreibung

### Technisches Gebiet

Die vorliegende Offenbarung bezieht sich auf die Eignungsprüfung von Materialien unter thermomechanischer Belastung.

### Hintergrund

Das Auslegen von Batteriesystemen gegen die Folgen des thermischen Durchgehens ist eine Herausforderung bei der Entwicklung von Elektrofahrzeugen. Für die Auslegung wird eine Batteriezelle gezielt zum thermischen Durchgehen gebracht, d.h. die chemische Reaktion durch einen Trigger (z.B. Nagelpenetration oder Überhitzen) bewusst herbeigeführt. Dadurch kommt es zu einer Wärme- und Gasfreisetzung in der Zelle, was wiederum zu einem Druckanstieg führt. Beim thermischen Durchgehen versagt dadurch das Zellgehäuse (bzw. je nach Bauform die Schutzhülle), wodurch es zum Entgasen (engl. venting) der Zelle kommt. Bei diesem Vorgang werden große Mengen heißer Gase und Partikel freigesetzt. Diese heißen Gase und Partikel verteilen sich oft im gesamten Batteriesystem, wobei die Gefahr besteht, dass auch der Gehäusedeckel bzw. der Gehäuseboden des die Zellen umschließenden Gehäuses durchbrennen. Auch ein Überspringen des thermischen Durchgehens auf benachbarte Zellen durch z.B. die Ablagerung heißer Partikel, ist möglich und muss vermieden werden. Neben dem Anbringen von definierten Entgasungsöffnungen im Gehäuse ist auch der Schutz kritischer Bereiche durch Schutzmaterialien eine mögliche Schutzstrategie. Wesentlich ist, dass das zur Herstellung der Batteriegehäuse und der Außenwände der Zellen verwendete Material möglichst hohen thermischen und mechanischen Belastungen (thermomechanischen Belastungen) standhält, die bei den genannten Fehlerszenarien typischerweise kombiniert auftreten. Bei der Auslegung eines Batteriesystems werden derartige Fehlerfälle häufig auch simuliert, was die Kenntnis des Verhaltens des verwendeten Materials bei thermomechanischer Belastung voraussetzt.

Vor der Simulation thermomechanischer Beanspruchungen, wie sie bei einem thermischen Durchgehen in Batteriezellen auftreten, ist es von zentraler Bedeutung, das Verhalten von Materialien unter gleichzeitiger thermischer und mechanischer Belastung präzise zu bestimmen, um zuverlässige Materialparameter für die Simulationsmodelle zu gewinnen. In bekannten Lösungen werden dafür Verfahren und Testaufbauten eingesetzt, die entweder durch den Einsatz von Treibladungen, kontrollierten Flammen oder alternativen Wärmequellen den Wärmeeintrag simulieren und dabei mechanische Lasten zur Beurteilung des Materialverhaltens aufbringen. Allerdings zeigen die herkömmlichen Ansätze wesentliche Mängel, da sie entweder einen kontinuierlichen Wärmeeintrag über längere Zeiträume nicht adäquat abbilden können, den Einfluss der mechanischen Lasten unzureichend berücksichtigen oder eine Oxidation und damit verbundene exotherme Reaktionen nicht verhindern können, welche zu einem zusätzlichen unkontrollierten Energieeintrag führen. Diese Defizite führen dazu, dass die Reproduzierbarkeit und Vergleichbarkeit der Testergebnisse eingeschränkt ist und eine direkte Ableitung von für die Simulation erforderlichen Materialparametern nur unzureichend möglich ist.

Daraus ergibt sich die Aufgabe, ein Verfahren und eine Vorrichtung zu entwickeln, die es ermöglichen, unter kontrollierten und reproduzierbaren Bedingungen einen definierten, länger andauernden thermischen Lastfall in Kombination mit einer präzisen mechanischen Beanspruchung zu simulieren, ohne dass störende, chemisch-reaktive Prozesse die Messung der Materialdeformation verfälschen.

### Zusammenfassung

Gemäß einem ersten Aspekt der vorliegenden Offenbarung wird ein Verfahren zum Prüfen der Eignung von Material unter thermomechanischer Belastung vorgeschlagen. In diesem Verfahren wird das Material in einer reaktionsträgen Umgebung angeordnet, es wird eine thermische Energie definierter Größe auf eine Oberfläche des Materials eingebracht, eine definierte mechanische Belastung auf das Material aufgebracht und eine Deformation des Materials in Reaktion auf die mechanische Belastung gemessen. Dieses Verfahren ermöglicht eine präzise und reproduzierbare Erfassung des Materialverhaltens unter gleichzeitiger thermischer und mechanischer Beanspruchung, unter anderem, da ein zusätzlicher unkontrollierter Energieeintrag durch chemische Reaktionen in der reaktionsträgen Umgebung verhindert wird. Dadurch wiederum wird eine realitätsnahe Simulation der Einsatzbedingungen in beispielsweise Batteriegehäusen erreicht und es können aussagekräftige Materialkennwerte gewonnen werden. Das geprüfte Material ist ein Stoff oder eine Substanz, das zur Erstellung physikalischer Objekte Verwendung findet und bestimmte Eigenschaften aufweist. Dies umfasst sowohl homogene Substanzen als auch heterogene Verbundsysteme. Dabei können in einem Material einzelne Schichten mit unterschiedlichen Funktionen miteinander kombiniert werden. Ein geprüftes Material kann also sowohl ein einheitliches, konsistentes Medium sein, es können jedoch auch geschichtete Materialien sein, wie sie beispielsweise im Aufbau eines Batteriegehäuses vorkommen können. Beispielsweise kann eine äußere Schicht als Gehäusematerial dienen und eine innere Schicht als Schutzmaterial, um in der Kombination spezifische Anforderungen an Stabilität, Wärmebeständigkeit und mechanische Belastbarkeit zu erfüllen.

Gemäß einigen Ausführungsformen umfasst das Verfahren ferner das Herstellen der reaktionsträgen Umgebung durch das Leiten eines inerten Gases an zumindest die Stelle an der Oberfläche des Materials, an der die thermische Energie in das Material eingebracht wird. Durch diese Maßnahme wird sichergestellt, dass das Material in einer Umgebung mit reduzierter Sauerstoffkonzentration geprüft wird, was unerwünschte oxidative Reaktionen verhindert und somit zu einer erhöhten Messgenauigkeit sowie zur besseren Nachvollziehbarkeit der Materialdeformation führt. Ein inertes Gas ist ein gasförmiger Stoff, der weitgehend keine chemischen Reaktionen mit anderen Substanzen eingeht. Somit lässt sich "inertes Gas" als ein Gas charakterisieren, das aufgrund seiner geringen Reaktivität in der Lage ist, ein Umgebungsklima zu schaffen, in dem chemische Reaktionen weitgehend unterbunden werden. Es wird eingesetzt, um in dem Prüfverfahren, in dem hohe thermische Energien eingebracht werden, eine kontrollierte Atmosphäre zu gewährleisten. Dabei sorgt das inerte Gas dafür, dass oxidative oder andere reaktionsfördernde Einflüsse minimiert werden, was zu konsistenteren und präziseren Ergebnissen beiträgt. Bei derartig verwendeten Gasen handelt es sich typischerweise um ein Gas wie Stickstoff oder eines der Edelgase, das aufgrund seiner vollständig besetzten Elektronenschalen eine sehr geringe Neigung zur Bildung chemischer Bindungen aufweist. Dieses Gas wird in definierten Flussraten und Drücken in einen Versuchsaufbau eingebracht, um den Anteil reaktiver Gase wie Sauerstoff in der Atmosphäre gezielt zu reduzieren. Eine präzise Steuerung der Gaszusammensetzung, Reinheit und Dosierung ermöglicht es, einen nahezu sauerstofffreien Raum zu erzeugen, in dem exotherme Reaktionen unter thermischer Belastung effektiv unterdrückt werden, wodurch die Messergebnisse hinsichtlich Materialdeformation und -verhalten unverfälscht bleiben.

Gemäß einigen Ausführungsformen umfasst das Verfahren ferner das Herstellen der reaktionsträgen Umgebung durch das Einbringen des Materials in einen vakuumierten Bereich. Durch die Erzeugung einer nahezu sauerstofffreien Atmosphäre wird eine Beeinflussung des Messergebnisses durch chemische Reaktionen weiter minimiert, was eine präzise Bestimmung der Reaktion des Materials auf die angelegten thermischen und mechanischen Belastungen ermöglicht.

Gemäß einigen Ausführungsformen wird im Verfahren die thermische Energie eingebracht, während die mechanische Belastung auf das Material ausgeübt wird. Durch diese simultane Anwendung der Lasten kann das unmittelbare Verhalten des Materials unter realitätsnahen, kombinierten Belastungsbedingungen erfasst werden, was die Aussagekraft der Messergebnisse erhöht und eine authentische Simulation der Einsatzbedingungen in Batteriegehäusen erlaubt.

Gemäß einigen Ausführungsformen wird im Verfahren die thermische Energie eingebracht, bevor die mechanische Belastung auf das Material ausgeübt wird. Diese sequentielle Vorgehensweise ermöglicht es, zunächst den thermischen Einfluss auf das Material zu etablieren, wodurch sich mögliche Veränderungen in den mechanischen Eigenschaften des Materials vor der Anwendung der mechanischen Belastung erfassen lassen, was zu einer differenzierteren Analyse des Materialverhaltens beitragen kann.

Gemäß einigen Ausführungsformen umfasst das Verfahren ferner das Bestimmen von zur thermomechanischen Simulation des Materials geeigneten Parametern des Materials. Durch die Ermittlung dieser Parameter können charakteristische Kenndaten des Materials extrahiert werden, die als Grundlage für weiterführende Simulationen dienen und die Optimierung des Designs von Batteriegehäusen ermöglichen.

Gemäß einigen Ausführungsformen umfassen die bestimmten Parameter mindestens einen aus der Menge Elastizitätsmodul, Streckgrenze und Bruchdehnung. Die Erfassung spezifischer Kennwerte ermöglicht eine quantitative Analyse der mechanischen Eigenschaften des Materials, wodurch fundierte Aussagen über dessen Belastbarkeit und Verhalten unter den interessierenden Bedingungen getroffen werden können. Gemäß einigen Ausführungsformen sind diese Parameter nicht direkt durch Messung zugänglich und werden aus den direkt gemessenen Parametern bestimmt. Wird zum Beispiel während der Messung zeitaufgelöst direkt die Kraft auf das Material sowie die Verformung des Materials während der thermischen Belastung gemessen (möglicherweise zusammen mit der Temperatur des Materials am Ort des Energieeintrags), können die genannten Parameter im Nachgang aus diesen Messwerten berechnet oder approximiert werden.

Gemäß einigen Ausführungsformen werden die Parameter in Abhängigkeit von der Menge der eingebrachten thermischen Energie erfasst. Diese Korrelationsaufnahme zwischen der zugeführten Energie und den Materialkennwerten erlaubt eine differenzierte Betrachtung des Einflusses von Wärme auf die mechanischen Eigenschaften des Materials und führt zu einer verbesserten Prognose der Materialleistung in realen Einsatzszenarien.

Gemäß einigen Ausführungsformen umfasst das Verfahren ferner das Erzeugen eines Parametersatzes für eine Simulation des Materials bei thermomechanischer Beanspruchung. Durch die Zusammenstellung eines umfassenden Parametersatzes können experimentelle Ergebnisse direkt in Simulationsmodelle integriert werden, was die Vorhersagbarkeit des Materialverhaltens verbessert und zur Optimierung der Sicherheitskonzepte von Batteriegehäusen beiträgt.

Gemäß einigen Ausführungsformen wird die thermische Energie im Verfahren mittels Strahlung eingebracht. Diese Methode gewährleistet einen präzise steuerbaren und reproduzierbaren einseitigen Wärmeeintrag, wodurch die Vergleichbarkeit der Versuchsergebnisse erhöht und die Simulation der tatsächlichen Einsatzbedingungen in Batteriegehäusen unterstützt wird.

Gemäß einigen Ausführungsformen erfolgt das Einbringen der thermischen Energie mittels eines Lasers, einer Infrarotheizung, einer Halogenlampe, einer Leuchtdiode oder eines Mikrowellenstrahlers. Die Möglichkeit, zwischen verschiedenen Strahlungsquellen zu wählen, bietet Flexibilität bei der Anpassung des Verfahrens an unterschiedliche Testanforderungen und gewährleistet, dass das Material unter variablen thermischen Bedingungen geprüft werden kann, was zu einer erweiterten Anwendbarkeit des Verfahrens führt.

Gemäß einem weiteren Aspekt wird eine Vorrichtung zum Prüfen der Eignung von Material unter thermomechanischer Belastung vorgeschlagen. Diese Vorrichtung umfasst eine reaktionsträge Umgebung, in der das Material angeordnet werden kann, einen Emitter von Strahlungsenergie zum Einbringen einer thermischen Energie definierter Größe in die reaktionsträge Umgebung und auf eine Oberfläche des Materials, eine Belastungsvorrichtung zum Aufbringen einer definierten mechanischen Belastung auf das Material sowie eine Messvorrichtung zum Messen einer Deformation des Materials in Reaktion auf die mechanische Belastung. Die Vorrichtung ermöglicht es, das Verhalten des Materials unter exakt kontrollierten thermischen und mechanischen Bedingungen zu untersuchen, wodurch verlässliche Daten zur Materialdeformation gewonnen werden. Dies trägt dazu bei, das Material gezielt hinsichtlich seiner Eignung für Batteriegehäuse zu bewerten und liefert wichtige Informationen für die Weiterentwicklung und Optimierung von Bauteilen auch in anderen sicherheitskritischen Anwendungen.

Gemäß einigen Ausführungsformen wird die Vorrichtung ferner dadurch erweitert, dass ein evakuiertes Gehäuse zum Erzeugen der reaktionsträgen Umgebung vorgesehen ist. Dieses evakuierte Gehäuse dient dazu, den Prüfbereich systematisch von atmosphärischen Gasen, insbesondere Sauerstoff, zu befreien, wodurch eine Umgebung geschaffen wird, in der chemische Reaktionen weitgehend unterdrückt sind. Die Integration eines evakuierten Gehäuses verbessert die Reproduzierbarkeit und Genauigkeit der Messergebnisse, indem es externe, reaktive Einflüsse minimiert und so eine präzisere Erfassung der Materialdeformation ermöglicht. Dadurch werden aussagekräftigere Daten generiert, die als Grundlage für Simulationen und Optimierungen im Bereich der Batteriegehäuseentwicklung dienen können.

Gemäß einigen Ausführungsformen wird ein Computerprogramm vorgeschlagen, das einen Programmcode umfasst, der das Durchführen des Verfahrens bewirkt. Durch die Integration von Datenerfassung, Steuerung und Auswertung in einem Softwarepaket wird der Prüfablauf automatisiert, was zu einer effizienteren und konsistenteren Durchführung der Tests führt und die Integration der gewonnenen Daten in Simulationsmodelle erleichtert.

### Figurenkurzbeschreibung

Einige Beispiele von Vorrichtungen und/oder Verfahren werden nachfolgend bezugnehmend auf die beiliegenden Figuren lediglich beispielhaft näher erläutert. Es zeigen:
Fig. 1 ein Flussdiagramm eines Ausführungsbeispiels eines Verfahrens zum Prüfen einer Eignung von Material unter thermomechanischer Belastung; und
Fig. 2 eine schematische Skizze einer Vorrichtung zum Prüfen einer Eignung von Material unter thermomechanischer Belastung.

### Beschreibung

Einige Beispiele werden nun ausführlicher Bezug nehmend auf die beiliegenden Figuren beschrieben. Weitere mögliche Beispiele sind jedoch nicht auf die Merkmale dieser detailliert beschriebenen Ausführungsformen beschränkt. Diese können Modifikationen der Merkmale sowie Entsprechungen und Alternativen zu den Merkmalen aufweisen. Ferner soll die Terminologie, die hierin zum Beschreiben bestimmter Beispiele verwendet wird, nicht einschränkend für weitere mögliche Beispiele sein.

Gleiche oder ähnliche Bezugszeichen beziehen sich in der gesamten Beschreibung der Figuren auf gleiche oder ähnliche Elemente beziehungsweise Merkmale, die jeweils identisch oder auch in abgewandelter Form implementiert sein können, während sie die gleiche oder eine ähnliche Funktion bereitstellen. In den Figuren können ferner die Stärken von Linien, Schichten und/oder Bereichen zur Verdeutlichung übertrieben sein.

Wenn zwei Elemente A und B unter Verwendung eines "oder" kombiniert werden, ist dies so zu verstehen, dass alle möglichen Kombinationen offenbart sind, d. h. nur A, nur B sowie A und B, sofern nicht im Einzelfall ausdrücklich anders definiert. Als alternative Formulierung für die gleichen Kombinationen kann "zumindest eines von A und B" oder "A und/oder B" verwendet werden. Das gilt Äquivalent für Kombinationen von mehr als zwei Elementen.

Wenn eine Singularform, z. B. "ein, eine" und "der, die, das" verwendet wird und die Verwendung nur eines einzelnen Elements weder explizit noch implizit als verpflichtend definiert ist, können weitere Beispiele auch mehrere Elemente verwenden, um die gleiche Funktion zu implementieren. Wenn eine Funktion im Folgenden als unter Verwendung mehrerer Elemente implementiert beschrieben ist, können weitere Beispiele die gleiche Funktion unter Verwendung eines einzelnen Elements oder einer einzelnen Verarbeitungsentität implementieren. Es versteht sich weiterhin, dass die Begriffe "umfasst", "umfassend", "aufweist" und/oder "aufweisend" bei deren Gebrauch das Vorhandensein der angegebenen Merkmale, Ganzzahlen, Schritte, Operationen, Prozesse, Elemente, Komponenten und/oder einer Gruppe derselben beschreiben, dabei aber nicht das Vorhandensein oder das Hinzufügen eines oder mehrerer anderer Merkmale, Ganzzahlen, Schritte, Operationen, Prozesse, Elemente, Komponenten und/einer Gruppe derselben ausschließen.

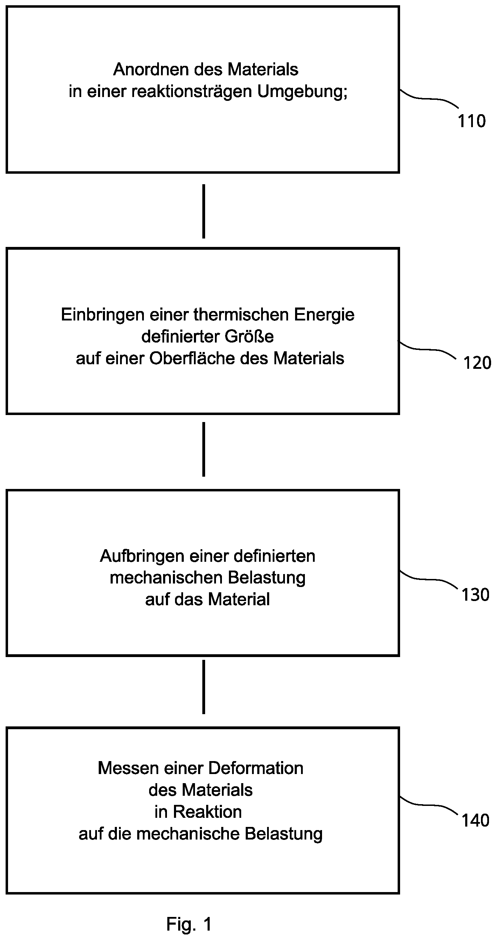

Fig. 1 zeigt ein Flussdiagramm eines Ausführungsbeispiels eines Verfahrens zum Prüfen einer Eignung von Material unter thermomechanischer Belastung.

In der schematischen Darstellung sind die einzelnen Verfahrensschritte in rechteckigen Blöcken dargestellt. Das Material wird in eine reaktionsträge Umgebung gebracht, bevor eine definierte Wärmemenge auf die Oberfläche des Materials aufgebracht wird. Ferner wird eine definierte mechanische Belastung an das Material angelegt, wobei das Belasten vor, während oder nach der Einbringung der thermischen Energie erfolgen kann. Ferner wird die Deformation des Materials als Antwort auf die mechanische und thermische Belastung bestimmt.

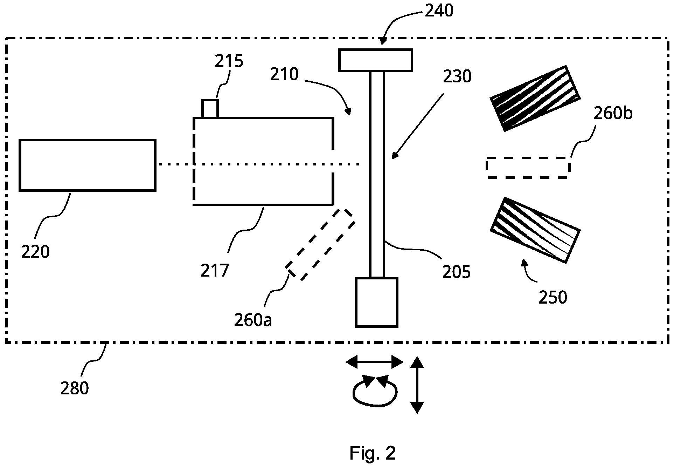

Das Material wird in einem Bereich 110 platziert, in dem chemische Reaktionen weitgehend unterdrückt sind, etwa durch das Zuführen eines inerten Gases oder durch das Erzeugen eines Vakuums. Beispielsweise könnte dies durch ein geschlossenes Gehäuse realisiert werden, das mit entsprechenden Dichtungen und Anschlüssen für Gas- oder Vakuumtechnik ausgestattet ist, um eine nahezu sauerstofffreie Atmosphäre zu schaffen, die das Material vor unerwünschten Reaktionen bewahrt. Wie das Ausführungsbeispiel in Fig. 2 zeigen wird, sind auch Ausführungsformen möglich, in denen das Material nicht oder unvollständig eingehäust ist.

Das Einbringen einer thermischen Energie 120 ist als gezieltes Aufbringen einer bestimmten Wärmemenge zu verstehen, was eine materialabhängige Temperaturerhöhung an der Oberfläche des Materials zur Folge hat. Dies kann beispielsweise durch eine Strahlungsquelle wie einen Laser, eine Infrarotheizung oder eine Halogenlampe erfolgen, die in ihrer Leistung und ihrem Abstrahlprofil regelbar ist. Dadurch lässt sich die Intensität und Dauer der Wärmeeinwirkung präzise steuern, um unterschiedliche Szenarien wie einen langsamen Temperaturanstieg oder eine schlagartige Erwärmung zu simulieren.

Das Aufbringen einer definierten mechanischen Belastung 130 umfasst das gezielte Ausüben von Kräften auf das Material, zum Beispiel in Form von Zug-, Druck-, Schub- oder Biegebelastungen. Auch eine Prüfung mittels variierender innen- oder Außendrücke zählt dazu. Ferner können definierte mechanische Belastungen durch schwingende Prüfung, Bruchmechanische Versuche zur Zähigkeitsbewertung und Methoden zur Prüfung unter Schlagartiger Belastung wie dem Schlagbiegeversuch verwendet werden. Dies kann beispielsweise mit einer Materialprüfmaschine mit steuerbaren Aktuatoren und Kraftaufnehmern geschehen, die sowohl statische als auch dynamische Belastungen appliziert. Dadurch wird das Material realitätsnah beansprucht und das Zusammenspiel von thermischer und mechanischer Belastung kann untersucht werden.

Das Messen einer Deformation und die Temperatur des Materials 140 erfasst Änderungen von Form oder Geometrie des Materials, die durch die thermomechanische Belastung hervorgerufen werden. Dies kann beispielsweise mit Dehnungsmessstreifen, optischen Systemen wie Hochgeschwindigkeitskameras oder Laser-Vibrometern geschehen, die eine hochauflösende und gegebenenfalls zeitaufgelöste Messung ermöglichen. Die Temperaturmessung kann auf Vorder- und /oder Rückseite erfolgen. Die so ermittelten Daten liefern Aufschluss über die Widerstandsfähigkeit und das Verhalten des Materials unter den kombinierten Einwirkungen von Wärme und mechanischer Last, was bei der Beurteilung seiner Eignung für Batteriegehäuse von entscheidender Bedeutung ist.

Fig. 2 zeigt in schematischer Form eine Ausführungsvariante der Vorrichtung zum Prüfen einer Eignung von Material 205 unter thermomechanischer Belastung. Das Material 205 befindet sich dabei in einer reaktionsträgen Umgebung 210. Ein Emitter 220 von Strahlungsenergie dient dem Einbringen einer thermischen Energie definierter Größe in die reaktionsträge Umgebung 210 und auf eine Oberfläche 230 des Materials 205. Die thermische Energie (die Wärmemenge) wird in der Vorrichtung nur auf einer Seite des Materials 205 eingebracht, da dies dem Fehlerfall in der Batteriezelle entspricht.

Zusätzlich kann mittels einer Belastungsvorrichtung 240 eine definierte mechanische Belastung auf das Material 205 ausgeübt werden, während eine Messvorrichtung 250 die daraus resultierende Deformation des Materials erfasst.

Die reaktionsträge Umgebung 210 ist ein Bereich, in dem unerwünschte chemische Reaktionen weitgehend unterbunden werden, beispielsweise durch das Entfernen von Sauerstoff oder das Zuführen eines inerten Gases. Im in Fig. 2 gezeigten Ausführungsbeispiel wird dies erreicht, indem die Oberfläche 230 des Materials an der Stelle, an der die Wärmemenge mittels eines Lasers (als Implementierung eines Emitters 220 von Strahlungsenergie) eingebracht wird, von einem inerten Gas angeströmt wird. Dadurch wird das Material 205 von reaktiven Einflüssen isoliert, was eine konsistente Messung der reinen thermischen und mechanischen Wechselwirkungen ermöglicht. Das inerte Gas wird über einen Anschluss in ein sich von dem Emitter 220 in Richtung des Materials 230 erstreckendes Volumen 217 eingebracht. Das Volumen 217 hat auf der dem Laser 220 zugewandten Seite ein Fenster, das für das inerte Gas undurchlässig, für das Licht des Lasers 220 jedoch transparent ist. Auf der dem Material 205 zugewandten Seite ist das Volumen 217 geöffnet, sodass das inerte Gas auf die Oberfläche 230 des Materials 205 strömt, und zwar an der Stelle, wo die Wärmeenergie eingebracht wird. Alternativ könnten Teile der Komponenten oder alle Komponenten des Aufbaus in einem Gehäuse angeordnet sein, um die reaktionsträge Umgebung durch ein Vakuum herzustellen. Eine mögliche Implementierung eines derartigen alternativen Gehäuses ist in der schematischen Darstellung strichliert dargestellt und ist mit dem Bezugszeichen 280 versehen.

Das Material 205 ist eine Probe, die auf ihre Tauglichkeit für Batteriegehäuse hin untersucht werden soll, indem sie definierten Prüfbedingungen ausgesetzt wird. In einer konkreten Ausführung könnte es sich um eine Platte oder einen Formkörper aus Metall, Kunststoff oder einem Verbundwerkstoff handeln, die in einer Halterung fixiert ist, um während des Prüfablaufs an derselben Stelle positioniert zu bleiben. Die Fixierung ermöglicht eine kontrollierte Einwirkung von Strahlung und mechanischen Kräften auf die Probe des Materials 205. Die Oberfläche 230 des Materials 205 ist der Teil der Probe bzw. des Materials, auf den die Strahlungsenergie gezielt einwirkt. Dabei kann es sich beispielsweise um eine frei zugängliche, ebene Fläche handeln, die entweder senkrecht zum Strahlungseinfall positioniert oder in einem definierten Winkel angeordnet ist, um bestimmte Schädigungsszenarien zu simulieren. Durch diese definierte Ausrichtung lässt sich der thermische Eintrag exakt steuern, sodass eine reproduzierbare Belastungssituation geschaffen wird.

Der Emitter 220 von Strahlungsenergie stellt allgemein gesprochen eine Einrichtung dar, die eine genau dosierte Wärmemenge in die reaktionsträge Umgebung 210 einbringt. In einer konkreten Implementierung kann dies ein Laser, eine Infrarotheizung oder eine andere Strahlungsquelle sein, die in ihrer Leistung und in ihrem Strahlprofil reguliert wird. Die Regelbarkeit ermöglicht es, die Intensität und Dauer der Wärmeeinwirkung so anzupassen, dass unterschiedliche Szenarien, wie etwa ein schrittweiser Temperaturanstieg oder eine plötzliche Hitzeeinwirkung, realisiert werden können.

Zudem in der gezeigten Ausführungsform mittels zweier Temperatursensoren 260a und 260b, die berührungslos oder mit Kontakt zum Material 205 ausgeführt sein können, die Temperatur des Materials 205 kontinuierlich gemessen wird. In alternativen Ausführungsformen ist es auch möglich, die Temperatur nur an einer Seite des Materials 205 zu messen.

Die Belastungsvorrichtung 240 ist eine Einrichtung, die eine definierte mechanische Last auf das Material 205 überträgt, um es beispielsweise unter Zug-, Druck- oder Biegebelastung zu setzen. Eine mögliche Implementierung könnte in Form einer Materialprüfmaschine mit steuerbaren Aktuatoren und Kraftaufnehmern erfolgen, die in der Lage ist, sowohl statische als auch dynamische Kräfte auf die Probe bzw. das Material zu applizieren. Durch die genaue Kontrolle dieser Kräfte kann das Verhalten des Materials unter realitätsnahen Beanspruchungen untersucht werden. Die Messvorrichtung 250 ist abstrakt gesehen ein System zur Erfassung der Deformation und Temperatur des Materials 205 in Reaktion auf die mechanische Belastung. Beispielsweise könnte dies ein Laser-Vibrometer, ein Dehnungsmessstreifen oder ein optisches Messsystem mit Hochgeschwindigkeitskamera(s) sein, das die Auslenkung oder Verformung des Materials 205 in Echtzeit aufzeichnet. Die Temperaturmessung kann auf Vorder- und /oder Rückseite erfolgen. Eine solche hochauflösende Erfassung der Materialreaktion erlaubt eine differenzierte Analyse der Belastungs- und Versagensmechanismen, was die Grundlage für die Beurteilung der Eignung des Materials für den Einsatz in Batteriegehäusen bildet.

Die Aspekte und Merkmale, die im Zusammenhang mit einem bestimmten der vorherigen Beispiele beschrieben sind, können auch mit einem oder mehreren der weiteren Beispiele kombiniert werden, um ein identisches oder ähnliches Merkmal dieses weiteren Beispiels zu ersetzen oder um das Merkmal in das weitere Beispiel zusätzlich einzuführen.

Mit anderen Worten beschreiben die Fig. 1 und 2 eine Vorrichtung und ein Verfahren, mit der thermisch-mechanische (thermomechanische) Lasten nachgebildet werden, wie sie typischerweise in einem Batteriegehäuse während des thermischen Durchgehens auftreten. Dabei wird kombiniert: eine Strahlungsquelle (beispielsweise ein Laser), eine mechanische Prüfung und eine inerte Gasumgebung. Mit der Strahlungsquelle wird der Wärmeeintrag (in der Realität durch Strahlung, heiße Gase und heiße Partikel) vereinfacht abgebildet. Die mechanische Prüfung erlaubt es die, durch den Wärmeeintrag hervorgerufene, mechanische Schädigung zu quantifizieren und somit Materialparameter für spätere Simulationen (basierend z.B. auf der Methode der Finiten Elemente) zu bestimmen. Die mechanische Last kann dabei vor, während und/oder nach dem Wärmeeintrag erfolgen. Durch die Inertisierung wird eine Entzündung von aus der Probe austretender Gase verhindert. Somit ist sichergestellt, dass neben der Strahlungsquelle keine zusätzliche Wärme eingebracht wird.

Durch die Nutzung dieser wohldefinierten Ersatzversuche lassen sich die Kosten pro Versuch geringhalten. Zugleich ermöglichen sie eine hohe Geschwindigkeit, da sowohl die Versuchsdauer kurz ist als auch ein schneller Probenwechsel gewährleistet wird. Die klar definierten Randbedingungen führen zu gut reproduzierbaren Ergebnissen und erlauben einen direkten Zugang zu Materialparametern, die in Simulationen einfließen können, um fundierte Entscheidungen über die Materialeignung für erwartete Lastfälle zu treffen. Zudem können Worst-Case-Szenarien mit höheren Belastungen als in einem realen Thermal Runaway getestet werden, wodurch eine umfassende Bewertung der Sicherheit und Leistungsfähigkeit des Materials ermöglicht wird.

Auch wenn in den vorhergehend beschriebenen Ausführungsbeispielen überwiegend Strahlungsquellen, insbesondere Laser, zum Einbringen der Wärmeenergie diskutiert wurden, können in weiteren Ausführungsbeispielen auch andere Energiequellen verwendet werden. Ein Beispiel sind allgemein elektromagnetische Wellen mit anderen Wellenlängen als im Bereich der Infrarotlaser. Möglich wären Ultraviolettstrahlung, Strahler im Bereich des sichtbaren Lichts, Infrarotstrahler oder Mikrowellenstrahler. Auch Ultraschall, eine Flamme, ein Gas- oder ein anderer Fluidstrahl, oder ein Partikelstrahl aus heißen Partikeln wäre denkbar.

Für die Anwendung von Ausführungsbeispielen des Verfahrens und der Analysevorrichtung von besonderer Relevanz ist das Phänomen des thermischen Durchgehens in einem Batteriegehäuse. Meist bestehen diese Gehäuse aus Stahl oder Aluminium, wobei auch Lösungen entwickelt wurden, die auf faserverstärktem Kunststoff oder einem Kunststoffverbundmaterial basieren. Multi-Material-Verbundwerkstoffe, die sowohl Gehäuse- als auch Schutzmaterialien kombinieren, müssen in der Lage sein, neben der thermischen Last durch heiße Gase und Partikel auch mechanische Belastungen, beispielsweise durch einen Anstieg des Innendrucks, zu widerstehen und ihre strukturelle Integrität über einen zuvor definierten Zeitraum beizubehalten.

Da das Testen solcher Multi-Material-Verbundwerkstoffe in realitätsnahen Umgebungen - wie sie im Rahmen eines Demonstrators eines Batteriesystems vorliegen - sowohl zeitintensiv als auch kostenintensiv ist, wäre es auch für diese Materialen von Vorteil, wenn die Auslegung simulationsbasiert oder -unterstützt erfolgen könnte. Durch die Anwendung des vorliegenden Verfahrens und der zugehörigen Analysevorrichtung wird es ermöglicht, Materialparameter zu bestimmen, die als Grundlage für simulationsbasierte Auslegungen dienen, sodass bereits in einem frühen Entwicklungsstadium fundierte Entscheidungen über die Eignung des Materials für die erwarteten Lastfälle getroffen werden können.

Darüber hinaus eröffnen sich mit dem vorliegenden Aufbau auch alternative Einsatzgebiete, bei denen die mechanische Stabilität von Proben unter einseitiger Wärmelast und Inertisierung untersucht werden soll. So können beispielsweise Untersuchungen von Konstruktionsmaterialien im Verteidigungssektor durchgeführt werden, bei denen die Proben unter Laserbeschuss getestet werden, um das Verhalten der Materialien in einer reduzierten oder komplett inerten Atmosphäre - wie sie in großer Flughöhe vorherrscht - zu analysieren. Ebenso ist der Lastfall des einseitigen Wärmeeintrages von Interesse für Fragestellungen im Bereich des Nuklearschutzes.

Insgesamt bietet die Analysevorrichtung durch die Inertisierung den Vorteil, dass die inneren Materialeffekte isoliert von etwaigen Verbrennungen in der Gasphase betrachtet werden können. Dies ermöglicht insbesondere die Entwicklung von Simulationsmodellen zur Materialcharakterisierung und Modellvalidierung für entsprechende thermomechanische Lastfälle, was zu einer verbesserten Vorhersage des Materialverhaltens und damit zu einer optimierten Auslegung sicherheitskritischer Komponenten beiträgt.

Es versteht sich ferner, dass die Offenbarung mehrerer, in der Beschreibung oder den Ansprüchen offenbarter Schritte, Prozesse, Operationen oder Funktionen nicht als zwingend in der beschriebenen Reihenfolge befindlich ausgelegt werden soll, sofern dies nicht im Einzelfall explizit angegeben oder aus technischen Gründen zwingend erforderlich ist. Daher wird durch die vorhergehende Beschreibung die Durchführung von mehreren Schritten oder Funktionen nicht auf eine bestimmte Reihenfolge begrenzt. Ferner kann bei weiteren Beispielen ein einzelner Schritt, eine einzelne Funktion, ein einzelner Prozess oder eine einzelne Operation mehrere Teilschritte, -funktionen, -prozesse oder -operationen einschließen und/oder in dieselben aufgebrochen werden.

Wenn einige Aspekte in den vorhergehenden Abschnitten im Zusammenhang mit einer Vorrichtung oder einem System beschrieben wurden, sind diese Aspekte auch als eine Beschreibung des entsprechenden Verfahrens zu verstehen. Dabei kann beispielsweise ein Block, eine Vorrichtung oder ein funktionaler Aspekt der Vorrichtung oder des Systems einem Merkmal, etwa einem Verfahrensschritt, des entsprechenden Verfahrens entsprechen. Entsprechend dazu sind Aspekte, die im Zusammenhang mit einem Verfahren beschrieben werden, auch als eine Beschreibung eines entsprechenden Blocks, eines entsprechenden Elements, einer Eigenschaft oder eines funktionalen Merkmals einer entsprechenden Vorrichtung oder eines entsprechenden Systems zu verstehen.

Die folgenden Ansprüche werden hiermit in die detaillierte Beschreibung aufgenommen, wobei jeder Anspruch als getrenntes Beispiel für sich stehen kann. Ferner ist zu beachten, dass - obwohl ein abhängiger Anspruch sich in den Ansprüchen auf eine bestimmte Kombination mit einem oder mehreren anderen Ansprüchen bezieht - andere Beispiele auch eine Kombination des abhängigen Anspruchs mit dem Gegenstand jedes anderen abhängigen oder unabhängigen Anspruchs umfassen können. Solche Kombinationen werden hiermit explizit vorgeschlagen, sofern nicht im Einzelfall angegeben ist, dass eine bestimmte Kombination nicht beabsichtigt ist. Ferner sollen auch Merkmale eines Anspruchs für jeden anderen unabhängigen Anspruch eingeschlossen sein, selbst wenn dieser Anspruch nicht direkt als abhängig von diesem anderen unabhängigen Anspruch definiert ist.

## Patentansprüche

1. Verfahren zum Prüfen einer Eignung von Material unter thermomechanischer Belastung, umfassend:
Anordnen (110) des Materials in einer reaktionsträgen Umgebung;
Einbringen einer thermischen Energie (120) definierter Größe auf einer Oberfläche des Materials;
Aufbringen einer definierten mechanischen Belastung (130) auf das Material; und
Messen einer Deformation des Materials (140) in Reaktion auf die mechanische Belastung.

2. Das Verfahren gemäß Anspruch 1, ferner umfassend:
Herstellen der reaktionsträgen Umgebung durch Leiten eines inerten Gases an zumindest die Stelle an der Oberfläche des Materials, an der die thermische Energie in das Material eingebracht wird.

3. Das Verfahren gemäß einem der vorhergehenden Ansprüche, ferner umfassend:
Herstellen der reaktionsträgen Umgebung durch Einbringen des Materials in einen vakuumierten Bereich.

4. Das Verfahren gemäß einem der vorhergehenden Ansprüche, wobei die thermische Energie eingebracht wird, während die mechanische Belastung auf das Material ausgeübt wird.

5. Das Verfahren gemäß einem der vorhergehenden Ansprüche, wobei die thermische Energie eingebracht wird, bevor die mechanische Belastung auf das Material ausgeübt wird.

6. Das Verfahren gemäß einem der vorhergehenden Ansprüche, ferner umfassend:
Bestimmen von zur thermomechanischen Simulation des Materials geeigneten Parametern des Materials.

7. Das Verfahren gemäß Anspruch 6, wobei die Parameter mindestens einen aus der Menge Elastizitätsmodul, Streckgrenze und Bruchdehnung umfassen.

8. Das Verfahren gemäß einem der Ansprüche 6 oder 7, wobei die Parameter abhängig von der Menge der eingebrachten thermischen Energie erfasst werden.

9. Das Verfahren gemäß einem der Ansprüche 7 oder 8, ferner umfassend:
erzeugen eines Parametersatzes für eine Simulation des Materials bei thermomechanischer Beanspruchung.

10. Das Verfahren gemäß einem der vorhergehenden Ansprüche, wobei die thermische Energie mittels Strahlung eingebracht wird.

11. Das Verfahren gemäß Anspruch 10, wobei das Einbringen der thermischen Energie mittels eines Lasers, einer Infrarotheizung, einer Halogenlampe, einer Leuchtdiode, einem Mikrowellenstrahler, Ultraschall, einer Flamme, eines Gas- oder eines anderen Fluidstrahls oder eines Partikelstrahl aus heißen Partikeln erfolgt.

12. Vorrichtung zum Prüfen einer Eignung von Material (205) unter thermomechanischer Belastung, umfassend:
eine reaktionsträge Umgebung (210), in der das Material angeordnet werden kann;
einen Emitter (220) von Strahlungsenergie zum Einbringen einer thermischen Energie definierter Größe in die reaktionsträge Umgebung (210) und auf eine Oberfläche (230) des Materials (205);
Eine Belastungsvorrichtung (240) zum Aufbringen einer definierten mechanischen Belastung auf das Material (205); und
eine Messvorrichtung (250) zum Messen einer Deformation des Materials in Reaktion auf die mechanische Belastung.

13. Die Vorrichtung gemäß Anspruch 12, ferner umfassend: ein evakuiertes Gehäuse zum Erzeugen der die reaktionsträgen Umgebung.

14. Die Vorrichtung gemäß Anspruch 12 oder 13, ferner umfassend:
eine Vorrichtung zur Messung der Temperatur des Materials auf der dem Emitter zugewandten Seite (260a) und/oder auf der dem Emitter abgewandten Seite (260b).

15. Computerprogramm mit einem Programmcode, der ein Durchführen des Verfahrens gemäß einem der Ansprüche 1 bis 11 mittels einer Vorrichtung gemäß einem der Ansprüche 12 und 13 bewirkt.
